# EUROPEAN PATENT APPLICATION

(11) **EP 1 454 522 A1**
(43) Date of publication of application: **08.09.2004**
(21) Application number: 04004944.7
(22) Date of filing: 03.03.2004
(51) Int. Cl.: A01G 9/16

(54) **Modular system for gazebos, greenhouses and similar**

(30) Priority: 07.03.2003 IT mi20030101
(71) Applicant: Star Progetti Tecnologie Applicate Srl, 20067 Tribiano (Milano) (IT)
(72) Inventor: Jenner Iolli, Vittorio Filippo, 20097 San Donato Milanese (IT)
(74) Representative: Petruzziello, Aldo

(57) **Abstract**

Modular system for gazebos, greenhouses and similar structures for outdoor or garden use provided with at least two side modules (2) which can be coupled together, and a roof (4) consisting of at least two roof modules (5). Each roof module (5) is provided with an interconnection system (13) for fixing each roof module (5), at the same time allowing it to be removed and rotated, to a side module (2).

## Description

This invention concerns a modular system for the creation of gazebos, greenhouses and similar outdoor constructions. In particular the present invention concerns a modular system for the creation of outdoor constructions provided with pyramidal roofs.

The production of gazebos, greenhouses and similar constructions for outdoor use and for gardens requires the manufacture of specific supporting frames in various shapes designed to support panels made of Plexiglas or other suitable materials.

The production of structures of this type involves some disadvantages relating to the need to design and produce a specific frame for each type of structure and above all for each type of roof.

To avoid said problems, modular systems have been proposed provided with side modules of various shapes, which can be combined with each other, and a prefabricated roof to obtain the final required structure.

Although said solution permits creation of the sides of the structure using base modules, thus overcoming problems and costs due to the design of different side structures each time, it does not provide a completely modular system. Before installation, the roof must be permanently assembled by welding or with other similar systems or even produced in one piece.

Due to their weight, the roofs produced in this way often require the use of specific lifting equipment for positioning on the structure.

The aim of the present invention is to solve the problems of the prior art, providing a modular system for the production of gazebos, greenhouses and similar structures for outdoor use or for gardens which is simple and inexpensive to produce and at the same time solves all the problems described above relating to the non-modular systems.

Another aim of the present invention is to provide a modular system for gazebos that permits extremely rapid and user-friendly assembly of the various modules and that does not require lifting equipment for installation of the roof on the side structure.

A further aim of the present invention is to provide a modular system, the connection of which provides a hermetic seal between the various modules.

These and further aims are achieved by means of a modular system featuring the characteristics described in the attached claim 1.

Basically, a modular system according to the present invention is provided with at least two side modules, which can be coupled to each other, and a roof, and is characterised in that the roof features at least two roof modules comprising an interconnection system for fixing each roof module, at the same time permitting removal and rotation, to a side module.

According to an advantageous aspect of the present invention, each roof module has a triangular shape. In this way, it is possible to create a modular system for a pyramidal roof with variable base which permits elimination of all the problems concerning design and production of a fixed supporting frame, thus reducing the costs of the structure.

A modular system of this type is also extremely easy to assemble, considerably reducing assembly times and related costs.

Advantageously, according to the present invention, the modular system comprises a cap and counter cap which can be positioned corresponding to the top of the roof to keep the roof modules in position.

According to a further advantageous aspect, the interconnection system comprises at least one hinge that can be engaged with a roof module and with a connection profile which in its turn can be engaged with a side module.

This means that the roof panels can be fitted on the side panels simply and quickly.

Further characteristics and advantages of the present invention will emerge more clearly from the following description, provided as a non-restrictive example, with reference to the attached drawings in which:
- figure 1 is a perspective view of a gazebo produced with the modular system according to the present invention;
- figure 2 is a perspective view of a further gazebo produced with the modular system according to the present invention;
- figures 3a, 3b, 3c are perspective views of examples of side modules according to the present invention;
- figure 4 is a section view of the system of interconnection of a roof module with a side module according to the present invention, taken along the line III-III of figure 1;
- figure 5 is a perspective view of a gazebo according to the present invention with the roof modules folded in, at least partially.

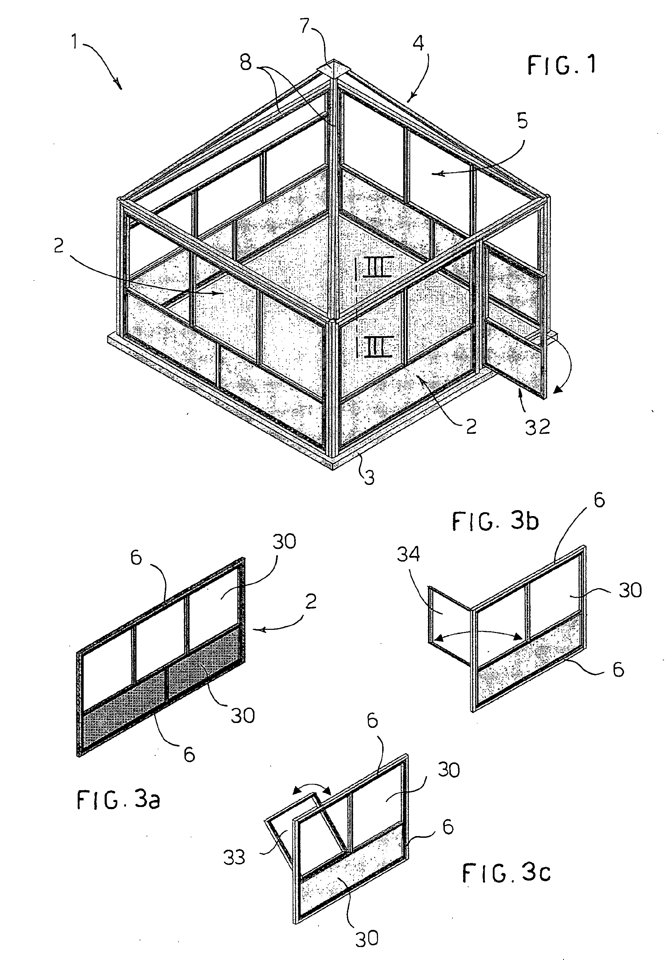

Figure 1 illustrates a gazebo 1 produced with the modular system according to the present invention. In particular the gazebo 1 comprises a roof 4 and four side modules 2 resting on a base 3 to form the perimeter sides of the gazebo.

The modules 2, which constitute the sides of the gazebo 1, as can be seen better in figures 3a, 3b, 3c can be different from each other. In detail, each side module 2 can consist of a variable number of panels 30 joined by profiles 6 which form a supporting frame.

The panels 30 of this type are known panels normally used for this purpose, also consisting of a supporting frame and a surface made of suitable material such as plastic, glass, metal or similar.

The side modules 2 can also be provided with access doors 32 (see figures 1 and 2) or flap-down windows 33 (figure 3c) or windows 34 with wing opening (figure 3b) and it is therefore possible to produce gazebos provided with sides consisting of several side modules 2 and/or modules differing from each other.

The side modules 2 are joined by means of connection/disconnection means such as bushes (not directly shown).

The roof 4 of the gazebo 1 also consists of four roof modules 5 joined by means of suitable means described in further detail below.

Each roof module 5 consists of a panel 35 defined by supporting profiles 6 and has a triangular shape. Each roof module 5 is combined with a side module 2 via an interconnection system 13 (figure 3) which fixes it but at the same time allows it to be removed and rotated with respect to a rotation axis. The rotation axis, also called folding axis, is arranged substantially parallel to the ground and coincides with the symmetry axis of the pin 15. The interconnection system 13 comprises a hinge 14 that can be engaged with the roof module 5 and with a connection profile 18.

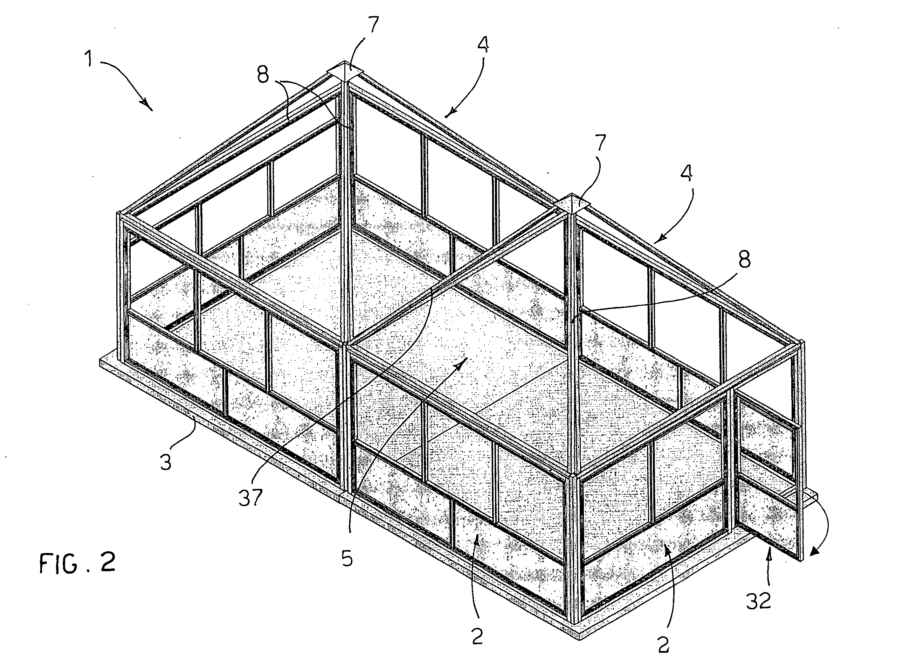

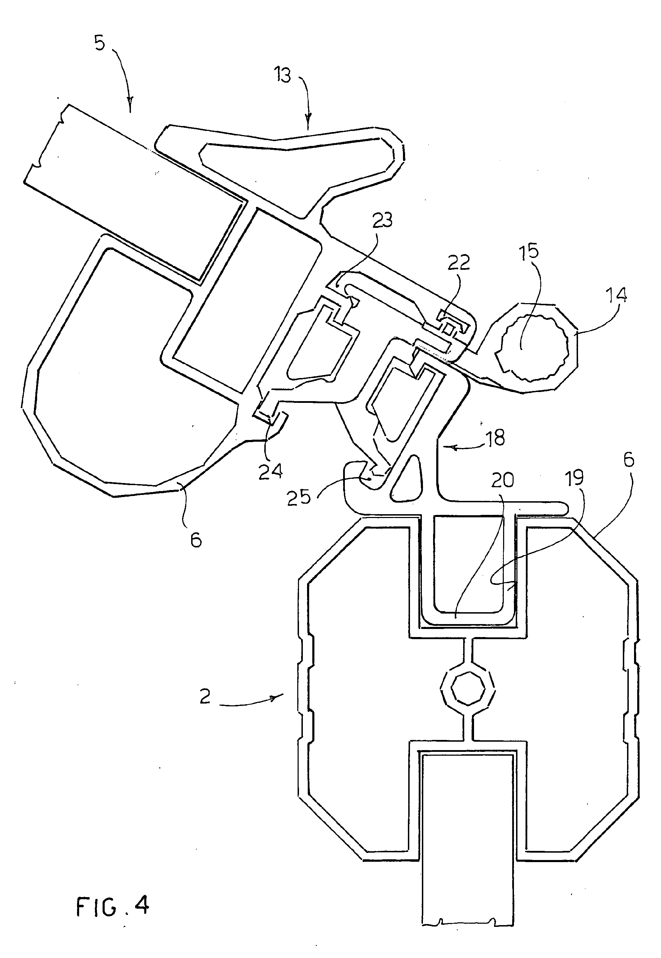

In detail, the hinge 14 comprises two levers that can be rotated around a pin 15 and which can be engaged, as can be seen better in figure 4, in seats 22, 23, 24, 25 provided in the roof module 5 and in the connection profile 18 to permit rotation of the roof module 5 with respect to the side module 2.

The connection profile 18 has a protruding portion 20 designed to engage in a seat 19 provided in the side module 2 to make the profile 18 integral with the side module 2. In particular, the seat 19 is provided in the upper profile 6 which represents a part of the supporting frame of the side module 2.

For each roof module it is possible to provide more than one interconnection system 13.

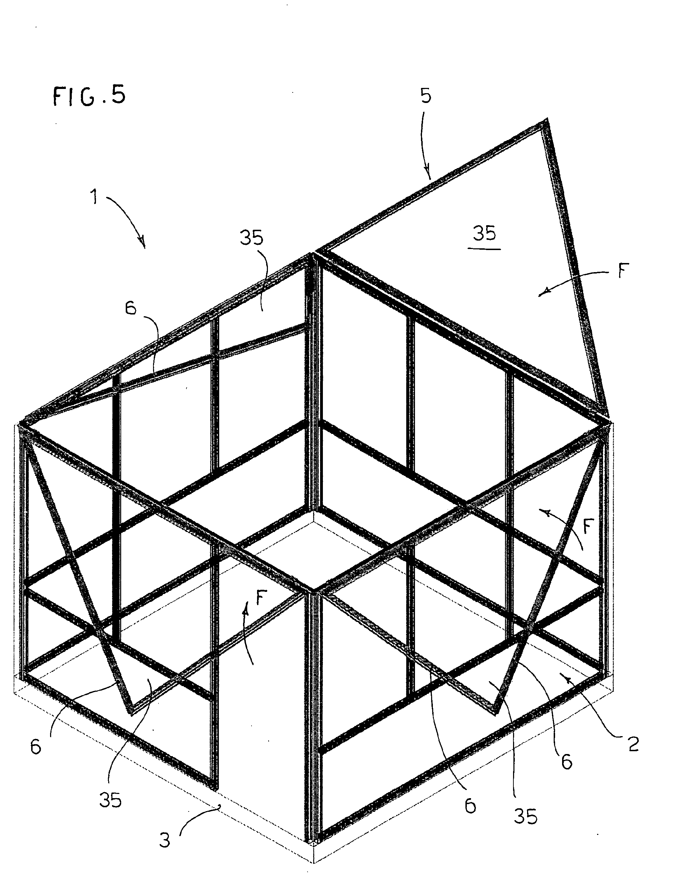

Once each roof module 5 has been combined with a side module 2, to assemble the roof 4, simply fold each roof module 5 around the above-mentioned folding axis, as shown by the arrows F in figure 5, until the top comers of each roof module 5 come in abutment together at the top.

Lastly, to lock each roof module 5 in position with respect to the remaining roof modules 5, the top comers of each module are engaged in a cap 7 and counter cap (not directly shown). The locking cap 7, as shown in figure 1, engages inside it the top comers of each roof module 5 and is screwed to the counter cap.

To provide a hermetic seal, the modular system according to the present invention comprises gasket elements, preferably made of plastic, to be positioned corresponding to the adjacent sides of two roof modules 5.

In particular, to provide a seal for the roof, the gasket elements slide into the clearance between the sides of two adjacent roof modules 5.

Once assembled, the roof 4 has a particular pyramid shape which has a pleasing appearance, is easy to produce and, at the same time, permits considerable reduction of assembly times.

Figure 2 illustrates a further gazebo 1 or a similar structure for outdoor use provided with a rectangular base 3. In this case, the longer sides of the rectangle consist of two side modules 2 assembled together, while the roof consists of two roof structures 4 identical to those illustrated in figure 1. As can be seen in figure 2, in said structure it is necessary to provide a supporting cross member 37 for the roof modules 5 arranged corresponding to the transverse centre line of the base 3.

Although a modular system has been described for producing gazebos with square and rectangular base, it is obviously possible to use the same modular system, if necessary with several modules and/or of different shape, to produce a gazebo with hexagonal, octagonal base etc. while remaining within the protective scope of the present invention.

Many modifications and variations can be made to the modular system according to the present invention while remaining within the protective scope of the same.

As an example, different interconnection devices can be provided which permit closing of the various modules and folding-in of each roof module with respect to an axis substantially parallel to the ground.

## Claims

1. Modular system for gazebos, greenhouses and outdoor structures provided with at least two side modules (2) which can be joined together and a roof (4) **characterised in that** said roof (4) comprises at least two roof modules (5) comprising at least one interconnection system (13) to fix each roof module (5), at the same time allowing it to be removed and rotated, to said side module (2).

2. Modular system according to claim 1, **characterised in that** each roof module (5) has a triangular shape.

3. Modular system according to claim 1 or 2, **characterised in that** said interconnection system (13) comprises at least one hinge (14) which can be engaged with a roof module (5) and with a connection profile (18) which in its turn can be engaged with a side module (2).

4. Modular system according to any one of the previous claims, **characterised in that** it comprises at least one locking cap (7) and at least one counter cap which can be positioned corresponding to the top of the roof (4) to engage the top comers of said roof modules (5) and lock them in position.

5. Modular system according to claim 4, **characterised in that** it comprises gasket elements (8) which can be positioned corresponding to the sides of the roof modules locked by said cap (7) and said counter cap in an adjacent position to provide a hermetic seal.

6. Modular system according to any one of the previous claims, **characterised in that** each side module (2) comprises connection/disconnection means to join and lock in an adjacent position two side modules (2).

7. Modular system according to any one of the previous claims, **characterised in that** each roof module (5) can be folded in with respect to the side module (2) on which it is fitted, rotating around a folding axis arranged substantially parallel to the ground.

8. Modular system according to any one of the previous claims, **characterised in that** the side modules (2) have different shapes.

9. Modular system according to any one of the previous claims, **characterised in that** it comprises four side modules (2) arranged according to the perimeter of a square base (3) and four roof modules each hinged to a side module (2); said four roof modules are joined at the top by a locking cap (7) and a counter cap.
